# EUROPÄISCHE PATENTSCHRIFT

(11) **EP 0 919 650 B1**
(45) Veröffentlichungstag und Bekanntmachung des Hinweises auf die Patenterteilung: **16.06.2004**
(21) Anmeldenummer: 98121424.0
(22) Anmeldetag: 11.11.1998
(51) Int. Cl.: D03D 1/00, D03D 15/00, G09F 3/02

(54) **Gewebtes Band, insbesondere Etikettband, und Verfahren zu dessen Herstellung und Benutzung**
Woven strip, particularly label strip, and method of manufacturing and using the same
Bande tissée, en particulier bande d'étiquettes, ainsi que procédé pour sa fabrication et son utilisation

(30) Priorität: 29.11.1997 DE 19753118
(43) Veröffentlichungstag der Anmeldung: 02.06.1999
(73) Patentinhaber: Rinke Etiketten Karl Rinke GmbH & Co. KG, 45549 Sprockhövel (DE)
(72) Erfinder: Feickert, Rolf, 42555 Velbert (DE); Tischer, Heinz, Dr., 44799 Bochum (DE); Kipp, Stefan, 42117 Wuppertal (DE)
(74) Vertreter: Mentzel, Norbert, Dipl.-Phys.

(56) Entgegenhaltungen:
- EP-A- 0 328 320
- EP-A- 0 621 574
- DE-A- 3 627 315
- DE-A- 3 644 786
- DE-A- 3 803 618
- DE-A- 19 518 231
- DE-C- 4 341 532
- PATENT ABSTRACTS OF JAPAN vol. 016, no. 013 (C-0901), 14. Januar 1992 & JP 03 234860 A (TORAY IND INC), 18. Oktober 1991

## Beschreibung

Die Erfindung richtet sich auf ein gewebtes Band, insbesondere ein Etikettband der im Oberbegriff des Anspruches 1 angegebenen Art.

Bei der Herstellung des bekannten Bands dieser Art (DE 38 03 618 A) das Grundgewebe ausschließlich aus Grundschussfäden und Grundkettfäden gewebt, aber dabei einen zusätzlichen Codeschussfaden verwendet, der als sogenannter Figurschuss eingearbeitet wurde und auf dem Grundgewebe die Figur eines Codemusters in Form von Streifen mit definierter Streifenbreite und mit definiertem Streifenabstand erzeugte. Der bekannte Codeschussfaden erzeugte auf dem Grundgewebe ein Muster aus sichtbaren Querstreifen, die über eine Teilbreite des Bandes sich erstrecken.

Entsprechendes gilt auch für gewebte Etikettbänder (DE 36 27 315 A), wo mittels einer computergesteuerten Bandwebmaschine die Codestriche eines Codemusters aus kontrastierendem Material auf dem Grundgewebe gefertigt wurden. Außer dem Strichcode wurden dabei auch normal lesbare Zeichen aus Buchstaben oder Ziffern mit eingewebt. Das Codemuster der Etiketten konnte außer einem identischen Codeteil auch noch einen für jedes Etikett spezifischen Laufnummercode aufweisen.

Der Strichcode wurde zwar mit dem Lichtstrahl eines Lasers oder einer Infrarotlichtquelle gelesen, war aber, zusammen mit den normal lesbaren Buchstaben und Ziffern in der Musterschicht auf dem Grundgewebe des Etiketts stets deutlich sichtbar. Bei Etiketten verwendet man in der Regel auch noch Musterfäden, die ein graphisches Design auf der Schauseite des Grundgewebes erzeugen.

Zur Herstellung von flexiblen Textilstücken, wie Bettwäsche, Handtüchern od. dgl., die chemischen Reinigungs-, Koch-, Wasch- und Mangelvorgängen ausgesetzt sind, hat man bei der Herstellung des Grundgewebes flexible Kontrastfäden verwendet, die Codestriche aus druckbeständigem, magnetisch erfassbarem Material erzeugten (DE 36 44 786 C2). Bei Dehnung des Grundgewebes dehnten sich die den Strichcode bildenden Kontrastfäden mit. Die Kontrastfäden bestanden aus schwarzen, das Codemuster erzeugenden Webfäden auf einem vorzugsweise weißen Grundgewebe.

Bei Etikettbändern ist die Fälschung ein großes Problem. Unberechtigte erzeugen Etiketten für bekannte oder gar berühmte Erzeugnisse und nähen sie dann in Plagiate ein. Diese Plagiate werden dann anstelle der Markenware verbilligt auf den Markt gebracht und täuschen über die gefälschten Etiketten eine Herkunft vor, die nicht stimmt. Bei den vorerwähnten bekannten Bändern und Etiketten mit sichtbarem Codemuster auf dem Grundgewebe sieht der Fälscher was er bei der Nachahmung eines Etiketts zu tun hat.

Um Etiketten und Bänder fälschungssicher zu machen, hat man einen Kett- und/oder Schussfäden unmittelbar mit einer Codierung versehen (DE 195 18 231 A). Diese Codierung erfolgte nicht erst beim Weben sondern bereits bei der Herstellung des Fadens. Man brachte mikroskopisch kleine Partikel an der Oberfläche eines Monofilaments oder innerhalb des verzwirnten Fadens eines Multifilaments Partikel ein, welche die gewünschte Codierung im Faden erzeugten. Die Partikel wurden z.B. in einer aus Polyester bestehenden Schmelze vor der Fadenbildung verteilt. Es sind auch textile Gewebe bekannt, bei denen einzelne Fäden fluoreszierend sind und unter UV-Lichtbestrahltung sichtbar werden. Die Herstellung eines solchen codierten Garns ist umständlich, schwierig, kostenaufwendig und führt leicht zu Codierfehlern.

Zur Herstellung eines Breitgewebes für gewebte Etiketten (DE 43 41 532 C1) hat man über eine Polymeremulsion eine Prägefolie mit holographischem Design auf das Breitgewebe aufgebracht und daraus einen Gewebe-Folien-Verbund erzeugt, aus welchem dann die Etikettbänder in Streifenform herausgeschnitten wurden. Der Herstellung der Prägefolie und die Erzeugung des Gewebe-Folien-Verbunds sind kostenaufwendige Vorgänge, welche die Herstellung der Etiketten beträchtlich verteuern.

Schließlich ist es bei gewebtem Material, z.B. Etiketten, bekannt (EP 0 328 320 A1) einen oder mehrere photochromatische Fäden zur Sicherheit zu benutzen. Diese photochromatischen Fäden sind farblos, wenn sie mit sichtbarem Licht bestrahlt werden. Sie gehen aber in einem Farbzustand in reversibler Weise über, wenn UV-Licht auf sie fällt. Diese photochromatischen Fäden haben aber keinen Informationsinhalt; sie dienen insbesondere nicht zur Ausbildung eines Codemusters.

Der Erfindung liegt die Aufgabe zugrunde, ein preiswertes Band, insbesondere ein Etikettband der im Oberbegriff von Anspruch 1 genannten Art zu entwickeln, das möglichst fälschungssicher ist. Nur besonders geschulte Kontrollpersonen sollen erkennen können, ob das Etikettband ein Original oder eine Fälschung ist. Dies wird erfindungsgemäß durch die im Anspruch 1 angeführten Maßnahmen erreicht, denen folgende besondere Bedeutung zukommt.

Bei der Erfindung werden Codeschussfäden verwendet, die mit den übrigen zur Herstellung des Grundgewebes dienenden Grundschussfäden optisch identisch sind und, im Wechsel mit diesen Grundschussfäden, gemeinsam das Grundgewebe des Bandes erzeugen. Das Codemuster ist unsichtbar; der Fälscher sieht nur ein gleichförmiges Grundgewebe. Die Codeschussfäden erstrecken sich über die ganze Bandbreite, wie der Grundschuss, und erzeugen das Grundgewebe mit. Zusätzlich zu diesem aus dem Grundschuss und dem Codeschuss erzeugten Grundgewebe kann es auch noch Musterfäden geben, die bei einem Etikettband auf der Schauseite dieses kombinierten Grundgewebes ein graphisches Design und/oder ein alphanumerische Daten beinhaltendes Bildmuster erzeugen. Die Codeschussfäden des Grundgewebes unterscheiden sich gegenüber den Grundschussfäden nur dadurch, dass sie bei Betrachtung im Licht einer außerhalb des sichtbaren Bereiches liegenden elektromagnetischen Strahlung erkennbar werden. Erst dann sieht man die Eintragungen der Codeschussfäden im Grundgewebe und erst dann wird das individuelle Codemuster sichtbar, das nur unter dieser Bedingung maschinenlesbar ist. Ein von unberechtigten Personen hergestelltes Etikett zeigt dieses Muster nicht und ist daher als Etikett-Nachahmung leicht zu identifizieren. Das als sogenannter Barcode oder Strichcode ausgebildete Codemuster entsteht also bei der Erfindung dadurch, dass man an definierten Stellen des Grundgewebes den Grundschuss durch den Codeschuss ersetzt.

Das Codemuster gibt in verschlüsselter Form einen bestimmten, gewünschten Informationsgehalt wieder, dem eine zusätzliche, für den Endabnehmer uninteressante und für den Fälscher geheimgehaltene Ausgabe zugeordnet sein kann. Diese Information ist erst von einer Kontrollperson über ein maschinelles Lesegerät ermittelbar, welches bei einer außerhalb des sichtbaren Bereiches liegenden elektromagnetischen Strahlung wirksam ist. Die der Information zugeordnete Angabe kann, in verschlüsselter Weise, Daten über den Hersteller, den Herstellungszeitpunkt, die Materialien, die Herkunft enthalten, aber auch weitere Daten über die Art und Bestimmung des mit dem Etikett auszurüstenden Erzeugnisses enthalten. So entsteht auch eine Kontrolle über die Authentizität der Kombination aus Etikett und Erzeugnis. Anhand der Übereinstimmung zwischen der Information über das Codemusters einerseits, die außerhalb des sichtbaren Bereiches vom Lesegerät ermittelt wird, und der optischen Beschaffenheit des Etiketts und des Erzeugnisses im sichtbaren Bereich andererseits lässt sich eindeutig klären, ob es sich um ein Original oder um eine Nachahmung des Etiketts und/oder des Erzeugnisses handelt.

Die Erfindung richtet sich auf ein Verfahren zur Herstellung und Benutzung eines solches Bandes. Die besonderen erfindungsgemäßen Maßnahmen dazu sind in den Verfahrensansprüchen 5 und 6 angeführt. Sie werden nachfolgend näher erläutert.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1,: in Vergrößerung und schematisch, die Draufsicht auf ein Etikettband nach der Erfindung bei Betrachtung im sichtbaren Bereich des Lichts,
- Fig. 2,: das gleiche Etikettband wie in Fig. 1, aber bei Betrachtung im UV-Licht,
- Fig. 3: die Webpatrone von jenem Teilstück des Bandes von Fig. 2, das dort mit III gekennzeichnet ist, und
- Fig. 4,: schematisch, eine Vorrichtung zur Herstellung des gewebten Bandes, anhand welcher das erfindungsgemäße Verfahren verdeutlicht werden wird, und
- Fig. 5: eine schematische Darstellung der Benutzung des erfindungsgemäßen Etiketts von seiner Herstellung bis zum Verkauf.

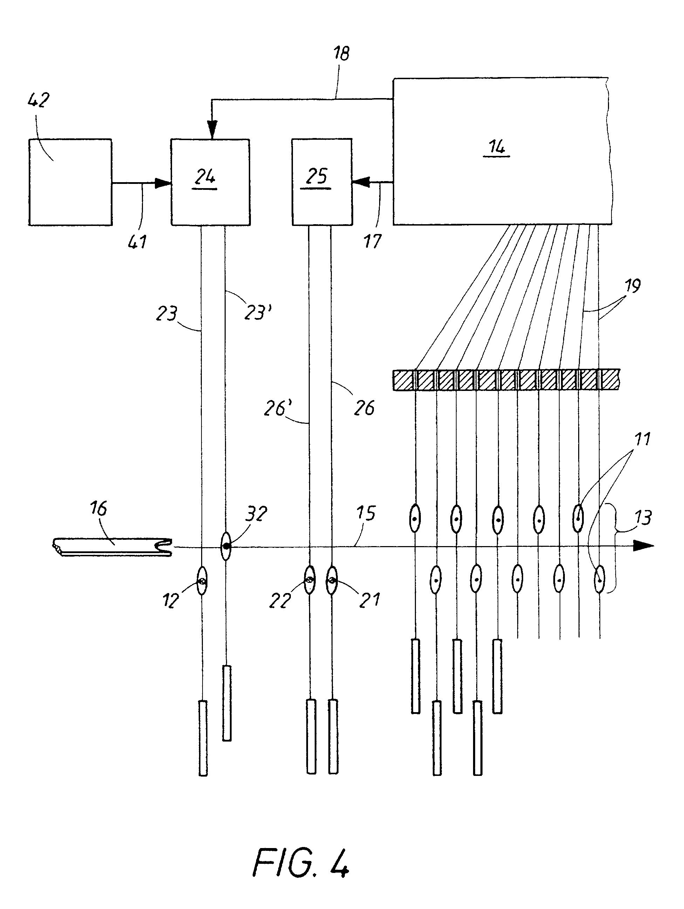

In den Figuren ist ein Etikettband gezeigt und dessen Herstellung näher erläutert. Es besteht zunächst aus einem Grundgewebe 10, zu dessen webtechnischem Aufbau Grundfäden 11, 12 und ein besonderer, noch näher zu erläuternder Codeschußfaden 32 verwendet werden, de ebenfalls als Schuß mit den Kettfäden 11 arbeitet. Diese Grundfäden bestehen aus einer Schar längsverlaufender Kettfäden 11 und aus einem quer dazu verlaufenden, damit bindenden Schußfaden 12. Die Arbeitsweise des Codeschußfadens 32 wird anhand der in Fig. 4 erkennbaren Webmaschine näher erläutert werden.

Die Kettfäden 11 werden von einem ein bestimmtes Webmuster und Bildmuster umfassenden Steuerprogramm einer Steuereinrichtung 14 zu einem Webfach 13 gespreizt. Dafür kann eine Jacquardmaschine verwendet werden, welche über die mit 19 gekennzeichneten Fadenzüge, die Litzen der Kettfäden 11 hebt und/oder senkt. Das Steuerprogramm kann elektronisch oder mechanisch aufgezeichnet sein. In dieses gespreizte Webfach 13 erfolgt dann eine in Fig. 4 durch den Pfeil 15 verdeutlichte Schußeintragung über ein Schußeintragungsmittel 16, das im vorliegenden Fall aus einer sogenannten Schußnadel besteht. Das Fadenmaterial für den Schußfaden 12 wird im vorliegenden Fall zwar von der Steuervorrichtung 14 ausgelöst; aber unter Vermittlung einer dazwischen geschalteten, noch näher zu beschreibenden Codiereinrichtung 24 bewirkt. Von der Codiereinrichtung 24 gehen zwei Fadenzüge 23, 23' aus, an denen Litzen für den Grundfaden 12 einerseits und für den Codeschußfaden 32 andererseits angebracht sind. Der Codeschußfaden 32 unterscheidet sich, unter normalen Bedingungen betrachtet, von dem Grundfaden 12 nicht. Beide Fäden 12, 32 besitzen die gleiche Beschaffenheit und die gleiche Farbe. Der Codefaden 32 unterscheidet sich aber von dem Fadenmaterial des Grundfadens 12 dadurch, daß er mit Fluoreszenzmaterial versehen ist, welches im Bereich der sichtbaren Strahlung nicht fluoresziert, aber bei kurzwelliger elektromagnetischer Strahlung Fluoreszenzlicht abstrahlt.

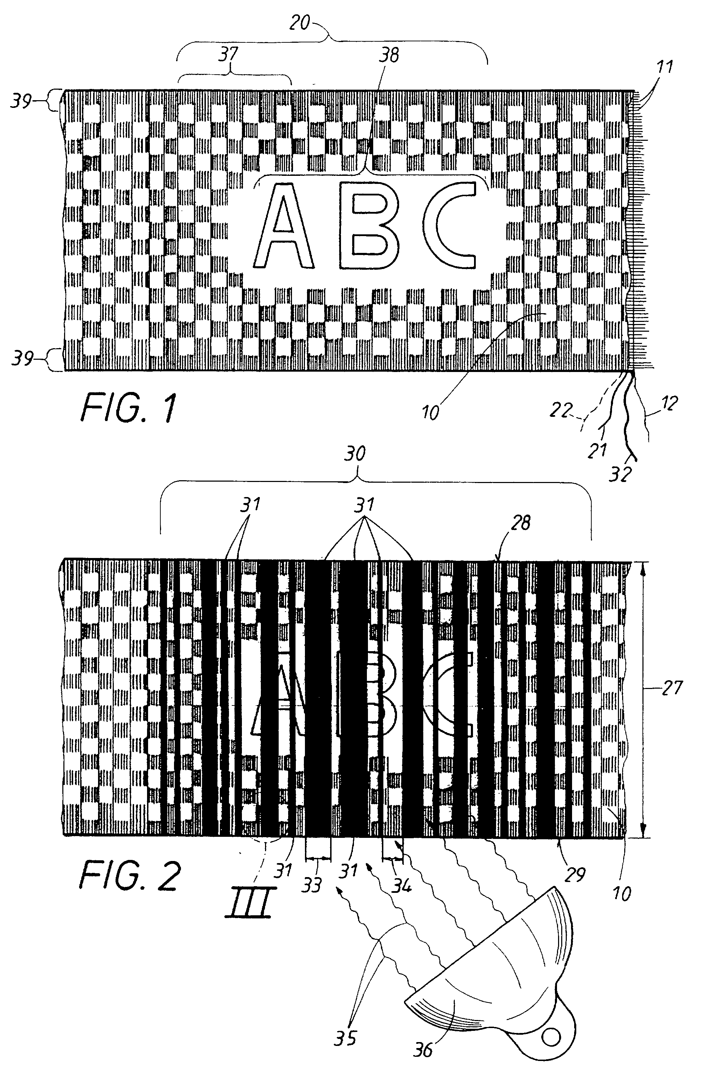

In Abhängigkeit davon, ob über die Fadenzüge 23 bzw. 23' der Grundfaden 12 oder der Codeschußfaden 32 in Ausrichtung mit dem durch den Pfeil 15 markierten Bewegungsweg des Eintragungsmittels 16 gelangt, wird der betreffende Faden erfaßt und in das Webfach 13 eingeführt. Im dargestellten Ausführungsbeispiel von Fig. 4 ist gerade der Codeschußfaden 32 dazu bereit. Das vorerwähnte Grundgewebe 10 entsteht also schußmäßig wahlweise entweder durch den Grundfaden 12 oder den besonderen Codeschußfaden 32. Das Ergebnis dieser unterschiedlichen Zusammensetzung des Grundgewebes 10 ist aus Fig. 2 zu erkennen. Die Fig. 2 zeigt das Grundgewebe 10 in Betrachtung bei UV-Licht 35, das von einer Lichtquelle 36 ausgeht. Die Codeschußfäden 32 erstrecken sich im Grundgewebe 10 über die ganze Bandbreite 27, also von einer Bandkante 28 zur gegenüberliegenden 29. Sie bilden dadurch Streifen 31 aus Codefaden-Schuß definierter Streifenbreite 33 und mit bestimmtem Streifenabstand 34 zueinander. Dieses unter UV-Licht 35 sichtbare Muster 30 der Codeschußfäden 32 soll nachfolgend kurz "Codemuster" bezeichnet werden.

Dieses Codemuster 30 kann nach einem bestimmten Codeschlüssel ausgebildet sein, z. B. nach dem sogenannten "Barcode". Dadurch ist es möglich, über das Codemuster 30 in verschlüsselter Form einen bestimmten Informationsgehalt im UV-Licht 35 erkennbar zu machen. Dieses Codemuster 30 ist vorteilhaft maschinenlesbar, wodurch die Information vom Lesegerät erfaßt und dem berechtigten Betrachter alpha-numerisch oder bildlich zur Kenntnis gebracht werden kann. Dies kann z. B. über einen Monitor, einen Drucker oder auf andere optische oder akustische Weise geschehen. Die berechtigte Person erkennt anhand der Existenz der fluoreszierenden Codefäden 30, ob es sich um ein autorisiertes Band handelt, das ein bestimmtes Markenerzeugnis kennzeichnet oder nicht. Da es dabei auf einen bestimmten Informationsgehalt ankommt, der verschlüsselt ist, kann die kontrollierende Person auch über den spezifischen Informationsinhalt schließen, ob dieses Band gefälscht ist oder nicht; der Informationsinhalt muß sich nämlich mit dem Sachverhalt decken, der aus den Begleitpapieren des damit versehenen Erzeugnisses entnehmbar ist. Dadurch ist eine hohe Fälschungssicherheit erreicht.

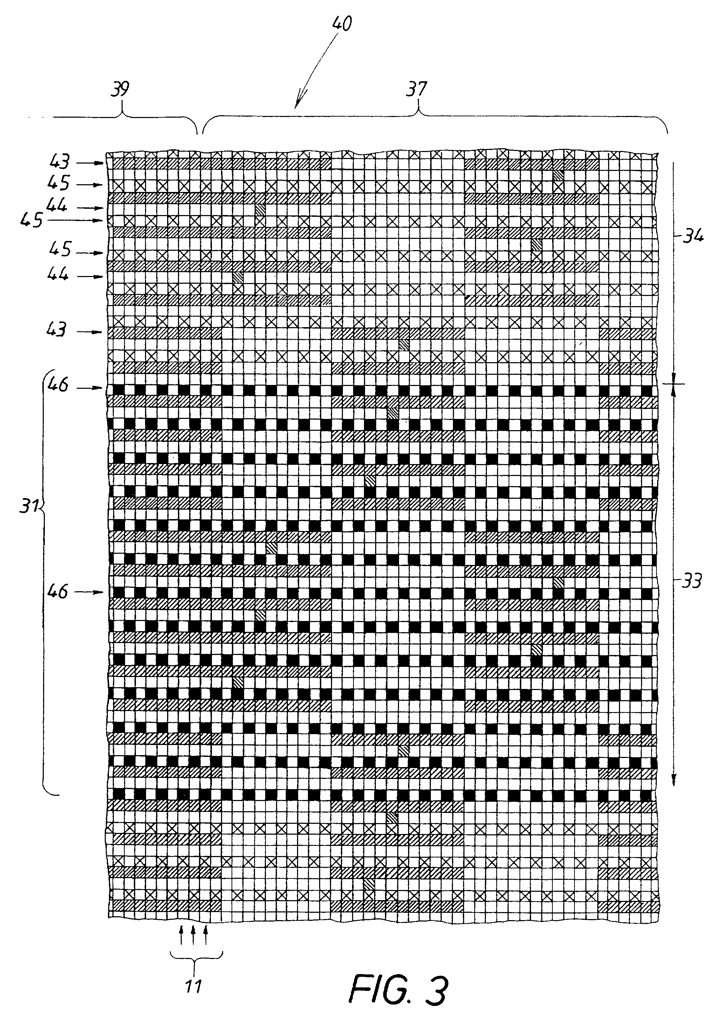

Die Befehle zur Schußeintragung kommen über die Steuerleitung 18 von der Steuervorrichtung 14 zu der Codiereinrichtung 24, die zur Hubsteuerung des Schusses dient. Diese empfängt aber ihre Codierbefehle von einem Codedatengeber 42 über eine Steuerleitung 41. In den Codedatengeber 42 werden die gewünschten Code-Informationen, z. B. über eine Tastatur, eingegeben, und in verschlüsselter Form als Steuerimpulse der Codiereinrichtung 24 zugeleitet. Es wird die Anzahl der Schußbefehle der Steuervorrichtung 14 gezählt und, entsprechend dem wiederzugebenden Codeinhalt, wahlweise der normale Grundfaden 12 oder der Codefaden 32 gegenüber dem Schußeintragungsmittel 16 wirksam gesetzt. Das Ergebnis ist aus der abschließend noch zu beschreibenden Webpatrone 40 von Fig. 3 zu erkennen.

Zum Aufbau des Etikettbandes von Fig. 1 dienen noch Musterfäden 21, 22, die hier als Schuß in das Grundgewebe 10 eingetragen werden, wofür das bereits erwähnte Schußeintragungsmittel 16 oder ein ähnliches gesondertes Mittel vorgesehen sind. Dazu sind die Musterfäden 21, 22 in Litzen angeordnet, die über die aus Fig. 4 ersichtlichen Fadenzüge 26 bzw. 26' von einer als Hubantrieb wirksamen Mustereinrichtung 25 bewegt werden. Die Mustereinrichtung erhält ihre Steuerbefehle über die Steuerleitung 17 von der Steuervorrichtung 14. In Abhängigkeit von der Form und Farbe des auszubildenden graphischen Designs 37 und/oder der gewünschten alphanumerischen Daten 38 werden die jeweiligen Musterfäden 21, 22 in Ausrichtung mit der Schußeintragung 15 des zugehörigen Schußeintragungsmittels 16 gebracht. Das graphische Design 37 besteht im vorliegenden Fall aus einem einfachen Karo-Muster mit durchgehenden Längsstreifen 39. Sie werden durch entsprechend bemessene Flottierungen auf der in Fig. 1 dargestellten Schauseite des Bandes von dem ersten Musterfaden 21 ausgeführt. Der zweite Musterfaden 22, der hier eine andere Farbe aufweist, dient zum Einweben der ablesbaren Daten 38. Dieser aus 37, 38 gebildete Bandschmuck 20 soll nachfolgend kurz "Bildmuster" bezeichnet werden. Das Bildmuster 20 entsteht also hier als Schußfigurierung mit zwei Schußfäden 21, 22. Es versteht sich, daß die Anzahl der Musterfäden beliebig größer oder kleiner sein könnte und daß statt einer Schußfigurierung auch eine Kettfigurierung zur Ausbildung eines Bildmusters genutzt werden könnte.

In Fig. 3 ist die Webpatrone 40 des bereits eingangs genannten Teilstücks III aus dem Band von Fig. 1 und 2 zwar in webtechnisch üblicher Weise dargestellt, jedoch als "Negativ". Jede Zeile bedeutet eine Schußeintragung und jede vertikale Reihe dokumentiert durch farbige Hervorhebung, die hier durch Schraffur, Kreuzung oder Schwärzung dargestellt ist, nicht einen Hub des Kettfadens an dieser Stelle, sondern seine "Absenkung". Dadurch kennzeichnen die farbigen Felder die Lage der sichtbaren Schußfigurierung.

An den in der Patrone 40 mit 43 gekennzeichneten Stellen kommt es zu einer Schußeintragung des ersten Musterfadens 21. Die nach rechts schräg schraffierten Felder verdeutlichen diejenigen Stellen, an denen die durch die längsverlaufenden Reihen gekennzeichneten Kettfäden in eine Tiefstellung gelangen und vom Schuß übergriffen werden. Dies richtet sich nach der Art des gewählten Bildmusters 20. Man erkennt aus dieser Schraffur einen Rest eines Randstreifens 39 am linken Bildrand von Fig. 3 und, rechts daran anschließend, die Flottierungen des vorbeschriebenen Karo-Designs 37. An den beispielsweise mit 44 gekennzeichneten Zeilen der Patrone 40 kommt es zu Schußeintragungen 44 des anderen Musterfadens 22, der im vorliegenden Fall zur Ausbildung der alphanumerischen Daten 38 dienlich ist. Wie Fig. 2 zeigt, ist in diesem Gewebeteilstück III eine solche Datenwiedergabe nicht vorgesehen. Daher erscheinen in der Webpatrone 40, durch die links schraffierten kleinen Felder gekennzeichnet, nur punktuelle Anbindungen dieses Musterfadens 22. Zwischen diesen Anbindepunkten flottiert der Musterfaden 22. Diese punktuellen Bindestellen verschwinden unter den schauseitig flottierend verlaufenden langen Schußeintragungen 43 des ersten Musterfadens 21 und sind daher schauseitig im fertigen Gewebe nicht erkennbar.

An den mit 45 gekennzeichneten Zeilen der Patrone 40 kommt es zu einer Schußeintragung des Grundfadens 12. Diejenigen Felder, wo bei dieser Schußeintragung 45 die Kettfäden im Webfach 13 oben liegen, sind durch ein Kreuz hervorgehoben. Man erkennt, daß das Grundgewebe durch die Schußfäden 12 in sogenannter "Leinwandbindung" arbeitet. Verfolgt man das Kreuz-Muster bei den Schußeintragungen 45 an aufeinanderfolgenden Zeilen, so erkennt man den abwechselnden Hoch- und Tiefgang der einzelnen Kettfäden 11. In der Patrone 40 entstehen innerhalb des mit 34 gekennzeichneten oberen Bereichs im Gewebe die im Zusammenhang mit Fig. 2 erläuterten Streifenabstände 34, welche frei von den Codeschußfäden 32 sind. Diese werden erst, anstelle der Schußfäden, innerhalb der sich dann anschließenden Streifenbreite 33 erzeugt. Auch das ist in Fig. 3 in dem dann folgenden Mittelabschnitt 33 der Patrone 40 zu erkennen. Hier erfolgen die mit 36 beispielhaft hervorgehobenen Schußeintragungen des Codeschußfadens 32. Jene Stellen, wo die Kettfäden 11 in der unteren Position des Webfachs 13 liegen und vom Schuß überdeckt sind, sind durch Schwärzungen hervorgehoben. Man erkennt, daß in diesem Streifen 33 der Codeschußfaden 32 anstelle des vorerwähnten Grundfadens 12 in Leinwandbindung arbeitet. In diesem Abschnitt 33 entsteht daher der Streifen 31 aus Codefäden 32 im Grundgewebe.

In Fig. 2 ist das Etikettband unter UV-Licht 35 in Vorderansicht gezeigt, weshalb das in Fig. 1 beschriebene Bildmuster 20 dem Betrachter an sich zugekehrt ist und das im Grundgewebe 10 enthaltene Codemuster 30 an sich zumindest stellenweise überdeckt. Die Fluoreszenzstrahlung der Codefäden 32 ist aber so stark, daß sie auch bei Betrachtung durch das Bildmuster 20 hindurch erkennbar ist. Auf jeden Fall sind die zur Ablesung des Codemusters 30 angewendeten Ablesegeräte ausreichend empfindlich, um, ohne vom Bildmuster 20 gestört zu werden, das Codemuster 30 eindeutig zu erkennen und wiedergeben zu können.

Im vorliegenden Fall sind die Codeschußfäden 32 Bestandteil des Grundgewebes 10. Es wäre auch möglich, ein Codemuster ganz oder teilweise in das Bildmuster eines Etikettbandes einzuweben. In diesem Fall werden die zugehörigen Codefäden, neben ihrer Funktion auch als Codemuster zu dienen, auch zur Ausbildung von Bildmustern im Grundgewebe herangezogen. Weil sowohl die Musterfäden als auch die zum Aufbau des Grundgewebes dienenden Fäden durch Schußeintragungsmittel ausgeführt werden, könnte der Codefaden sowohl Bestandteil des Grundgewebes als auch des daraus heraustretenden Bildmusters sein.

Es wäre auch möglich, unterschiedliche Sorten von Fadenmaterial zum Aufbau diverser Codefäden zu verwenden. Dieses Fadenmaterial sollte sich bei Betrachtung außerhalb des sichtbaren Bereiches unterscheiden. Dann ist es nämlich möglich, je nach Wellenlänge des auffallenden Lichtes, einmal die eine und dann die andere Sorte von eingewebten Codefäden sichtbar zu machen. Man könnte auch durch Auswahl entsprechender Licht-Bandbreiten gleichzeitig mehrere unterschiedliche Sorten von Codefäden sichtbar machen. Werden die unterschiedlichen Sorten der Codefäden zueinander oder gruppenweise zusammengefaßt in einem eigenständigen Codemuster im Band angeordnet, so können, in Abhängigkeit vom Frequenzbandbereich des einstrahlenden Lichts, unterschiedliche, codierte Informationen abgerufen und abgelesen werden. Dadurch kann die Fälschungssicherheit der Erfindung noch gesteigert werden.

Die in Fig. 4 gezeigte Vorrichtung ist in ihrem rechten Bildbestandteil von konventioneller Art. Zur Herstellung von Etikettbändern werden derartige Steuervorrichtungen 14 benutzt, welche außer dem Befehl zur Fachbildung der Kettfäden 11 auch Steuerbefehle für die Auswahl der diversen Musterfäden 21, 22 und zum Eintrag einer oder mehrerer Schußfäden 12 beinhalten. Durch eine Nachrüstung der bekannten Webmaschinen mit den Bauteilen 43', 41 und 42 im linken Bereich der Fig. 4 können die erfindungsgemäßen Bänder hergestellt werden. Der Aufwand ist gering und mit den bekannten Einrichtungen ohne weiteres kompatibel. Die Umrüstung ist also schnell durchführbar. Bei Bedarf können durch Stillsetzen der nachgerüsteten Teile wieder konventionelle Bänder anstelle der erfindungsgemäßen Bänder auf der gleichen Maschine hergestellt werden.

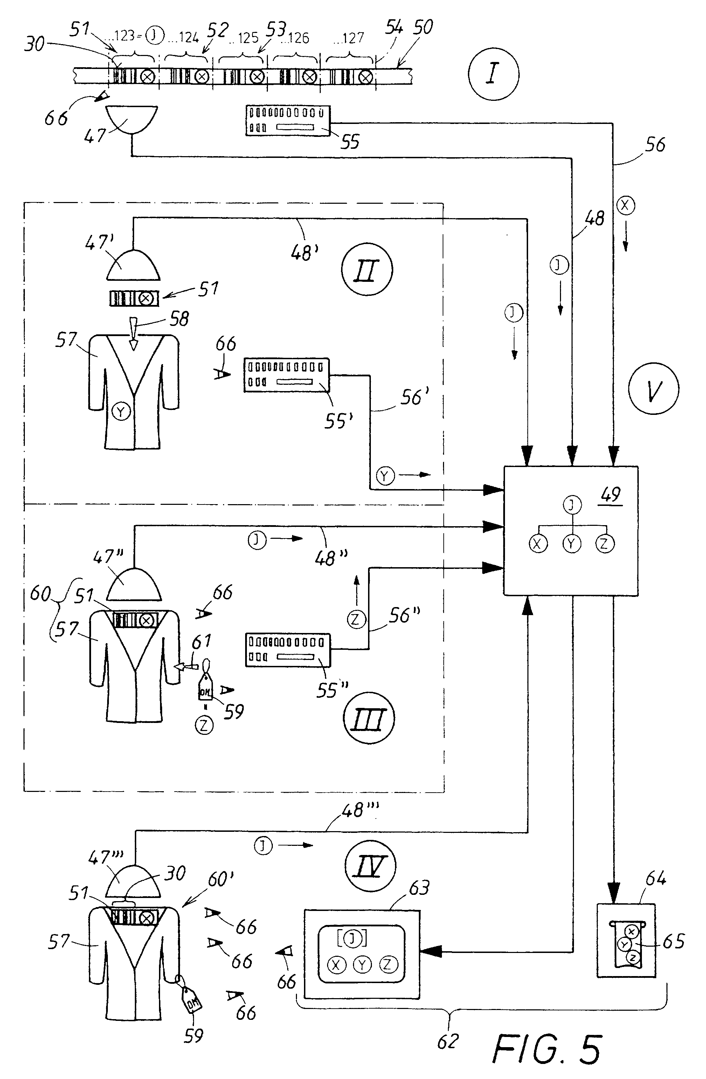

Die Fig. 5 zeigt schematisch eine besondere Benutzung des in Fig. 1 bis 3 gezeigten erfindungsgemäßen Etiketts. Dort sind in vier Stationen I - IV verschiedene aufeinanderfolgende Vorgänge für die Benutzung solcher Etiketten veranschaulicht. Die Station I soll zwar im dargestellten Ausführungsbeispiel noch beim Etikett-Hersteller vorliegen, könnte aber auch schon beim Verarbeiter erfolgen. Es liegt zunächst ein gewebtes Band 50 vor, welches in fortlaufender Folge zunächst noch zusammenhängende Etiketten 51, 52, 53 usw. enthält. Die Etiketten werden durch angedeutete Trennschnitte 54 spätestens in der zweiten Station II vereinzelt. Vor ihrer weiteren Verarbeitung werden sie von einem im UV-Licht wirksamen Lesegerät 47 erfasst, das über eine Leitung 48 mit einem Datenspeicher 49 verbunden ist. Dabei wird das beschriebene Codemuster 30 erfaßt. Das Codemuster umfaßt, in einem verschlüsseltem Barcode, zunächst Angaben über die Art und Qualität des jeweiligen Etiketts 51, was sinngemäß auch für alle übrigen Etiketten 52, 53 usw. gilt. Darüber hinaus besitzt aber jedes Etikett auch noch eine spezifische Indizierung, die in Fig. 5 durch eine Zahlenfolge ... 123 bei Etikett 51 veranschaulicht ist und nachfolgend mit dem Symbol J gekennzeichnet werden soll. Die nachfolgenden Etiketten 52, 53 usw. haben eine dementsprechend abweichende Indizierung J, die z.B. beim Etikett 52 in der Station I mit ... 124 lauten kann. Wie in Fig. 5 veranschaulicht wird diese Indizierung J vom Lesegerät 47 automatisch ermittelt und mit in den Speicher 49 eingegeben.

Bedarfsweise können in der Station I oder in der die erste Verarbeitungsstufe kennzeichnenden zweiten Station II über eine Eingabeeinrichtung 55, die über eine Leitung 56 ebenfalls mit dem gleichen Datenspeicher 49 verbunden ist, weitere etikett-spezifische Daten eingegeben, die z.B. das vorausgehend in Fig. 1 beschriebene graphische Design 37 oder das Bildmuster 20 des jeweiligen Etiketts 51. Diese Formen kann der Hersteller optisch erkennen, was durch ein Symbol 66 des menschlichen Auges in Fig. 5 veranschaulicht ist, und dann die Einrichtung 55 entsprechend bestätigen. Der Datenspeicher 49 kann dabei an einem externen Ort, z.B. der in Fig. 5 mit V gekennzeichneten gesonderten Station angeordnet sein. Die Daten über dieses graphische Design bzw. Bildmuster sind in Fig. 5 mit X symbolisiert. Sie werden im Datenspeicher 49 mit der vorausgehend als Indizierung angegebenen Information J verknüpft.

Die nächste Station II zeigt Maßnahmen, die der Verarbeiter mit den einzelnen Etiketten 51, 52, 53 usw. ausführt. Dies ist anhand des Etiketts 51 veranschaulicht. Der Verarbeiter will mit diesem Etikett 51 ein bestimmtes Erzeugnis 57, z.B. ein Kleidungsstück, kennzeichnen. Das soll in der Station II erfolgen. Der Verarbeiter verfügt seinerseits über ein Lesegerät 47', das wieder die Identifikations-Nummer J erfaßt, wie aus Fig. 5 hervorgeht. Der Verarbeiter verbindet dieses Etikett 51 gemäß dem Verarbeitungspfeil 58 fest mit dem Kleidungsstück 57. Außerdem gibt er über eine weitere Eingabeeinrichtung 55' die spezifische Erschaffenheit dieses Erzeugnisses 57 in den Datenspeicher 49 ein. Auch das kann vom Verarbeiter optisch festgestellt werden, wie aus dem Symbol 66 zu entnehmen ist. Dies erfolgt wieder durch eine analoge Leitung 56'. Die dort symbolisch angegebenen Daten Y betreffen verschiedene Informationen über die Beschaffenheit dieses Erzeugnisses 57, z.B. Qualität, Hersteller, Zeitpunkt der Herstellung, Größe der Kleidung usw.. Sie werden im Datenspeicher 49 ebenfalls mit der dort bereits enthaltenen und nun erneut abgelesenen Indizierung J verknüpft. Dann liegt, wie in der Station III zu erkennen ist, als Objekt 60 eine Kombination aus dem Etikett 51 und dem Erzeugnis 57 vor, die dem Datenspeicher 49 bekannt ist.

Die nächste Station III in der Kette aufeinanderfolgender Benutzer kann bei einem Händler vorliegen, der die Kombination 60 vertreiben will. Er kann die Kombination 60 ergänzen, z.B. indem er ein Preisschild 59 an dem Kleidungsstück 57 anbringt, wie durch den Anbringungspfeil 61 in Fig. 5 veranschaulicht ist. Auch die Station III verfügt über ein Lesegerät 47", wo die Indizierung J erfaßt und über die Leitung 48" dem Datenspeicher 49 gemeldet wird, Gleichzeitig verfügt die Station III über eine Eingabeeinrichtung 55", mit welcher weitere Daten Z über die zugehörige Leitung 56" den Datenspeicher 49 gemeldet und dort wiederum mit der Indizierung J verknüpft werden können. Es versteht sich, daß anstelle des Preisschildes 59 und der Preisangabe Z auch andere Objekte und entsprechend zugehörige Daten Z verwendet werden könnten, z.B. Accessoires zu dem Kleidungsstück 57. Diese Vorgänge in der Station III können in mehreren gesonderten Stufen erfolgen, in denen das Objekt 60 schrittweise vervollkommnet wird, bis z.B. die mehrstufige Konfektion des Kleidungsstücks 57 beendet ist. Es liegt dann schließlich eine Gesamt-Kombination 60' aus den in diesem Beispiel verknüpften drei Bestandteilen vor, nämlich dem Etikett 51, dem Erzeugnis 57 und dem Preisschild 59 vor.

Diese Gesamt-Kombination 60' erreichte schließlich eine Endstation IV in der Kette der Benutzer, die bei einem Verkäufer vorliegen mag. Auch dort befindet sich ein Lesegerät 47"', welches das Codemuster 30 vom Etikett 51 dieser Gesamt-Kombination 60' abliest und über die Leitung 56''' erneut die Indizierung J dem Speicher 49 meldet. Im Datenspeicher 59 sind die eingegebenen Daten X, Y und Z der jeweiligen Indizierung J fest zugeordnet. Es liegt ein Datensatz X, Y, Z vor, der in der Station IV abgerufen und in einem oder mehreren Kontrollgeräten 62 angezeigt wird, z.B. in einem Display 63 oder in einem Drucker 64, der diese Angaben auf einem Kontrollbon 65 festhält. Eine Kontrollperson kann, wie wieder durch die Betrachtungs-Symbole 66 angedeutet ist, vergleichen, ob die Datenangaben X, Y, Z im Kontrollgerät 62 mit der Beschaffenheit des Objekts 60' übereinstimmen. Im vorliegenden Fall kann also die Kontrollperson in dreifacher Hinsicht überprüfen, ob bei der Gesamt-Kombination 60' manipuliert worden ist; sie prüft das Etikett 51, die Beschaffenheit des Erzeugnisses 57 und die Angaben im Preisschild 59 auf ihre Übereinstimmung mit den von ihm im Kontrollgerät 62 ablesbaren Daten. Wenn Manipulationen an der Gesamt-Kombination 60' durch Unberechtigte erfolgt sind, so wird dies in der Station IV eindeutig festgestellt. Anstelle einer menschlichen Kontrollperson, können natürlich auch automatische Prüfgeräte den Vergleich 66 zwischen den Angaben im Kontrollgerät 62 und der Beschaffenheit des Gesamtobjektes 60' übernehmen, z.B. Videokameras. In der Endstation IV können Signalgeber vorgesehen sein, die das Ergebnis der Prüfung 66 optisch oder akkustisch melden und so die Übergabe der Gesamt-Kombination 60' an den Kunden verhindern.

### Bezugszeichenliste :

- 10: Grundgewebe
- 11: als Kettfaden arbeitender Grundfaden von 10
- 12: als Schußfaden arbeitender Grundfaden von 10
- 13: Webfach für 11 (Fig. 4)
- 14: Steuervorrichtung für 11, 21, 22, 12
- 15: Pfeil der Schußeintragung (Fig. 4)
- 16: Schußeintragungsmittel
- 17: Steuerleitung zwischen 14 und 25
- 18: Steuerleitung zwischen 14 und 24
- 19: Fadenzug für 11
- 20: Bildmuster aus 37, 38
- 21: erster Musterfaden für 20
- 22: zweiter Musterfaden für 20
- 23, 23': Fadenzug für 12 bzw. 32
- 24: Codiereinrichtung für 12, 32; Schußsteuerwerk
- 25: Mustereinrichtung für 21, 22; Mustersteuerwerk
- 26, 26': Fadenzug für 21, 32
- 27: Bandbreite
- 28: eine Gewebekante von 10
- 29: andere Gewebekante von 10
- 30: Codemuster aus 12, 32
- 31: Codestreifen aus 32
- 32: Codeschußfaden
- 33: Streifenbreite von 31
- 34: Streifenabstand zwischen 31
- 35: UV-Licht von 36
- 36: Lichtquelle
- 37: graphisches Design, Karo-Muster
- 38: alphanumerische Daten
- 39: Randstreifen von 20
- 40: Webpatrone (Fig. 3)
- 41: Steuerleitung zwischen 42, 24
- 42: Codedatengeber (Fig. 4)
- 43: Linie der Schußeintragung von 21
- 44: Linie der Schußeintragung von 22
- 45: Linie der Schußeintragung von 12
- 46: Linie der Schußeintragung von 32
- 47: Lesegerät bei Station I
- 47': Lesegerät bei Station II
- 47": Lesegerät bei Station III
- 47"': Lesegerät bei Station IV
- 48: Leitung zwischen 47, 49
- 48': Leitung zwischen 47', 49
- 48": Leitung zwischen 47", 49
- 48"': Leitung zwischen 47"', 49
- 49: Datenspeicher
- 50: gewebtes Band
- 51: erstes Etikett von 50
- 52: zweites Etikett von 50
- 53: drittes Etikett von 50
- 54: Trennschnitte zwischen 51, 52, 53 in 50
- 55: Eingabeinrichtung in Station I
- 55': Eingabeeinrichtung in Station II
- 55": Eingabeeinrichtung in Station III
- 56: Leitung zwischen 55, 49
- 56': Leitung zwischen 55', 49
- 56": Leitung zwischen 55", 49
- 57: Erzeugnis, Kleidungsstück
- 58: Verarbeitungs-Pfeil in Station II zwischen 51 und 57
- 59: Preisschild
- 60: Objekt, Kombination von 51, 57
- 60': Gesamt-Kombination aus 51, 57, 59 in Station IV
- 61: Pfeil der Anbringung von 59 an 57 bzw. 60 in Station III
- 62: Kontrollgerät in Station IV
- 63: Display von 62
- 64: Drucker von 62
- 65: Kontrollbon in 64
- 66: Symbol der Betrachtung, Prüfungsvorgang

- I: erste Station, Etikett-Hersteller
- II: zweite Station, Etikett-Verarbeiter
- III: dritte Station, Händler, Konfektionär
- IV: Endstation, Verkäufer
- V: externer Ort für 49

- J: Indizierung für 51
- X: Etikettdaten für Design, Bildmuster
- Y: Daten des Erzeugnisses 57
- Z: Preisangaben auf 59 für 57

## Patentansprüche

1. Gewebtes Band, insbesondere Etikettband, mit ein Grundgewebe (10) erzeugenden Grundschussfäden (12) und Grundkettfäden (11),
mit zusätzlichen Codeschussfäden (32), die nach dem Codeschlüssel eines sogenannten Barcodes (Strichcode bzw. Balkencode) ins Band eingearbeitet sind und ein Codemuster (30) in Form von Streifen (31) mit definierter Streifenbreite (33) und mit definiertem Streifenabstand (34) erzeugen,
wobei das Codemuster (30) einen bestimmten Informationsgehalt hat,
und gegebenenfalls mit Musterfäden (21, 22), die als Musterschussfäden (43, 44) und/oder als Musterkettfäden eingebunden sind und ein graphisches Design (37) und/oder ein alphanumerische Daten beinhaltendes Bildmuster (20) auf der Schauseite des Grundgewebes (10) erzeugen,
**dadurch gekennzeichnet ,**
**dass** die Codeschussfäden (32) sich über die ganze Bandbreite (27) erstrecken, im Wechsel mit den Grundschussfäden (12) eingetragen sind und erst gemeinsam mit diesen Grundschussfäden (12) das Grundgewebe (10) erzeugen,
**dass** die im Grundgewebe (30) eingetragenen Codeschussfäden (32) zwar bei Betrachtung im Licht einer außerhalb des sichtbaren Bereichs liegenden elektromagnetischen Strahlung mit den in webtechnisch analoger Weise eingearbeiteten Grundschussfäden (12) und Grundkettfäden (11) im wesentlichen optisch identisch sind und daher das Codemuster (30) unsichtbar machen,
**dass** aber diese Codeschussfäden (32) bei Betrachtung im Licht (35) einer außerhalb des sichtbaren Bereichs liegenden elektromagnetischen Strahlung sich deutlich von den Grundkettfäden (11) und Grundschussfäden (12) unterscheiden und daher das von ihnen erzeugte Codemuster (30) im Grundgewebe (30) sichtbar machen,
**dass** der Codeschussfaden (32) mit einer im optischen Bereich unsichtbaren Fluoreszenzfarbe versehen ist und dass das Codemuster (30) durch UV-Licht (35) im Band sichtbar wird.

2. Band nach Anspruch 1, **dadurch gekennzeichnet, dass** mehrere Codeschussfäden (32) vorgesehen sind, die fadenweise aus zueinander unterschiedlichen Sorten von Fadenmaterial bestehen,
und dass diese Fadensorten - bei Betrachtung in einem oder in mehreren, außerhalb des sichtbaren Bereichs liegenden Frequenzbereichen der elektromagnetischen Strahlung - sich voneinander unterscheiden, sonst aber - bei Betrachtung in sichtbarem Bereich - optisch identisch sind.

3. Band nach Anspruch 2, **dadurch gekennzeichnet, dass** jede Fadensorte von Codefäden (32) in einem eigenständigen Codemuster (30) im Grundgewebe (10) angeordnet ist.

4. Band nach einem der Ansprüche 1 bis 3, **dadurch gekennzeichnet, dass** das von den Codefäden (35) erzeugte Codemuster (30) maschinenlesbar ist.

5. Verfahren zur Herstellung eines gewebten Bandes nach einem oder mehreren der Ansprüche 1 bis 4, wobei das Grundgewebe (10) aus einer Schar von Grundkettfäden (11) und aus wenigstens einem zur Schusseintragung (45) dienenden Grundschussfaden (12) erzeugt wird,
und mit wenigstens einem weiteren, ein Codemuster in Form eines Barcodes im Band erzeugenden Codeschussfadens (32),
**dadurch gekennzeichnet ,**
**dass** zur Schusseintragung (45, 46) beim Weben des Grundgewebes (10) außer dem Grundschussfaden (12) auch Codeschussfäden (32) dienen,
indem die Codeschussfäden (32) nur dann an Stelle des Grundschussfadens (12) zur Schusseintragung (46) ausgewählt wird,
wenn an der betreffenden Gewebestelle, gemäß dem Codemuster (30) ein Barcodestreifen (31) im Bandgewebe (31) auftreten soll,
während sowohl in den Zwischenräumen (34) zwischen den Barcodestreifen (31) als auch in den außerhalb des Codemusters (30) liegenden Bandabschnitten nur der Grundschussfaden (12) zur Schussbildung (45) benutzt wird.

6. Verfahren zur Benutzung der einzelnen, als Etiketten (51, 52, 53) dienenden Abschnitte des gewebten Bandes nach einem oder mehreren der Ansprüche 1 bis 5,
wobei die Etiketten (51, 52, 53) ein Codemuster (32) in Form eines Barcodes besitzen und das Codemuster (32) durch ein Lesegerät abgelesen wird,
**dadurch gekennzeichnet ,**
**dass** das Codemuster (32) jedes einzelnen Etiketts (51) oder einer Gruppe von Etiketten mit einer spezifischen Indizierung (J) versehen wird, welcher gesonderte Speicherplätze in einem zentralen Datenspeicher (49) zugeordnet sind,
**dass** eine Schar von Lesegeräten (47 bis 47''') und gegebenenfalls eine Schar von Eingabeeinrichtungen (55 bis 55") für zusätzliche benutzerspezifische Daten (X, Y, Z) in einer oder mehrerer Stationen I - IV in der Kette der Benutzer dieser Etiketten (51) zwischen der Etikett-Herstellung (I) einerends und der Etikett-Endverwertung (IV) andererends vorgesehen sind,
wobei die benutzerspezifischen Daten (X, Y, Z) weitere Angaben über das Etikett (51), über die Verarbeitung des Etiketts und/oder über das mit dem jeweiligen Etikett auszurüstende Erzeugnis (57) beinhalten und vom Etikett-Hersteller (I), Verarbeiter (II), Händler (III) und/oder Verkäufer (IV) eingegeben werden,
**dass** diese Lesegeräte (47 bis 47''') und Eingabeeinrichtungen (55 bis 55") mit dem zentralen Datenspeicher (49) verbunden sind, wobei im Datenspeicher (49) die in den einzelnen Stationen I bis III jeweils eingegebenen benutzerspezifischen Daten (X, Y, Z) als Datensatz den abgelesenen Indizierungen (J) der individuellen Kombination (60, 60') aus Etikett (51) und Erzeugnis (57) zugeordnet werden,
**dass** an der Endstation IV der Benutzerkette außer einem Lesegerät (47''') für das am jeweiligen Erzeugnis (57) befestigte Etikett (51) auch noch ein an den Datenspeicher (49) angeschlossenes Kontrollgerät (62), wie ein Display (63), ein Drucker (64) und/oder ein Signalgeber, positioniert ist, und das Kontrollgerät (62) aus dem Datenspeicher (49) den zur abgelesenen Indizierung (J) zugehörigen Datensatz der benutzerspezifischen Daten (X, Y, Z) abruft, anzeigt und/oder auswertet
und **dass** dieser Datensatz (X, Y, Z) von einer Kontrollperson oder vom Kontrollgerät (62) selbst auf seine Übereinstimmung (66) mit dem konkreten Erscheinungsbild der Kombination (60, 60') aus Etikett (51) und Erzeugnis (57) überprüft wird.

## Claims

1. Woven ribbon, particularly label ribbon, with main weft threads (12) and main warp (11) creating a backing fabric (10),
with additional code weft threads (32) that are woven in to the ribbon as a barcode corresponding to a code key and create a code pattern (30) in the form of bars (31) with a defined bar width (33) and a defined bar spacing (34),
with the code pattern (30) having a specific information content,
and, if necessary, with pattern threads (21, 22) that are woven in as pattern weft threads (43, 44) and /or warp threads and create a graphic design (37) and/or a picture pattern (20) containing alphanumeric data on the face side of the backing fabric (10),
**characterized in that**
the code weft threads (32) extend over the complete width of the ribbon (27) and are woven alternately with the main warp threads (12) and create the backing fabric (10) only together with these main warp threads (12),
although the code weft threads (32) woven into the backing fabric (10) are essentially optically identical to the main weft threads (12) and main warp threads (11), woven using a similar weaving technique, when subjected to electromagnetic radiation outside a visible range, and therefore render the code pattern (30) invisible,
however these code weft threads (32) when viewed in the light (35) of an electromagnetic radiation outside the visible range are clearly distinguishable from the main warp threads (11) and main weft threads (12) and therefore make the code pattern (30) generated by them in the backing fabric (10) visible,
that the code weft threads (32) are provided with a fluorescent die invisible in the visible range and that the code pattern (30) is made visible in the ribbon by UV light (35).

2. Ribbon in accordance with claim 1, **characterized in that** several code weft threads (32) are provided, with the threads consisting of sorts of thread material that are different from each other,
and that the types of thread, when viewed in one or more frequency ranges of the electromagnetic radiation outside the visible range are distinguished from each other but, when viewed in the visible range, are optically identical.

3. Ribbon in accordance with claim 2, **characterized in that** each type of thread of the code threads (32) is arranged in a separate code pattern (30) in the backing fabric (10).

4. Ribbon in accordance with one of claims 1 to 3, **characterized in that** the code pattern (30) created by the code threads (35) is machine readable.

5. Method for producing a woven ribbon in accordance with one or more of claims 1 to 4, with the backing fabric (10) being produced from a group of main warp threads (11) and with at least one main weft thread (12) serving as weft insertion (45),
and with at least one further code weft thread (32) creating a code pattern in the ribbon in the form of a barcode,
**characterized in that**
in addition to the main weft threads (12), code weft threads (32) also serve for weft insertion (45, 46) when weaving the backing fabric (10),
**in that** the code weft threads (32) are then only selected for weft insertion (46) instead of the main weft thread (12),
if at the relevant weaving point, a barcode bar (31) according to the code pattern (30) occurs in the backing fabric (31) at the relevant weaving point,
whereas in the intermediate spaces (34) between the barcode bar (31), and also in sections of the ribbon outside the code pattern (30), only the main weft threads (12) are used for weft forming (45).

6. Method for using the individual sections of the woven ribbon, serving as labels (51, 52, 53), in accordance with one or more of claims 1 to 5,
with the labels (51, 52, 53) having a code pattern (32) in the form of a barcode and the code pattern (32) being readable by a reader,
**characterized in that**
the code pattern (32) of each individual label (51) or group of labels is provided with a specific indexing(J) assigned to separate memory places in a central data memory (49),
a group of readers (47 to 47"') and if necessary also a group of input devices (55 to 55") for additional user-specific data (X, Y, Z) are provided in one or more stations I - IV in the chain of users of these labels (51) between the label manufacturer (I) at one end and the label end user (IV) at the other end,
with the user-specific data (X, Y, Z) containing further information on the label (51), on the processing of the label and/or on the product (57) to which the particular label is attached and being entered by the label manufacturer (I), processor (II), dealer (III) and/or seller (IV),
these readers (47 to 47"') and input devices (55 to 55") are connected to the central data memory (49), with the user-specific data (X, Y, Z) entered in the individual stations I to III as data records being assigned in the data memory (49) to the read indexing (J) of the individual combinations (60, 60') of the label (51) and product (57),
in addition to a reader (47' ") for the label (51) attached to the particular product (57), a control unit (62), such as a display (63), a printer (64) and/or a signal generator, is positioned at the end station IV of the user chain, and that the control unit (62) calls up, from the data memory (49), the data record, belonging to the read indexing (J) of the user-specific data (X, Y, Z) and displays and/or evaluates same,
and this data record (X, Y, Z) is checked by a supervising person or by the control unit (62) itself for agreement (66) with the concrete appearance of the combination (60, 60') from the label (51) and product (57).

## Revendications

1. Ruban tissé, en particulier ruban d'étiquettes, avec des fils de trame de base (12) et des fils de chaîne de base (11) générant un textile de base (10),
avec des fils de trame du code (32) supplémentaires, intégrés dans le ruban selon la clé de codification d'un code dit code barres (code à traits ou à barres) et qui génèrent un motif codé (30) sous forme de bandes (31) présentant une largeur définie (33) et à une distance précise (34) les unes des autres,
sachant que le motif codé (30) a une teneur en informations précise,
et le cas échéant avec des fils (21, 22) générateurs de motif et intégrés comme fils de trame (43, 44) et/ou comme fils de chaînes et qui génèrent sur le côté visible du textile de base (10) un motif graphique (37) et/ou un motif imagé (20) contenant des données alphanumériques,
**caractérisé en ce que**
les fils de trame du code (32) s'étendent sur toute la largeur du ruban (27), qu'ils ont été insérés en alternance avec les fils de trame de base (12) et que c'est en association avec ces fils de trame de base (12) qu'ils génèrent le textile de base (10),
**en ce que** les fils de trame du code (32) insérés dans le textile de base (30), lorsqu'observés à la lumière d'un rayonnement électromagnétique situé hors du spectre lumineux visible paraissent, visuellement, identiques pour l'essentiel avec les fils de trame de base (12) et fils de chaîne de base (11) insérés selon une technique de tissage analogue, rendant ainsi le motif du code (30) invisible,
mais **en ce que** les fils de trame du code (32), lorsqu'observés à la lumière (35) d'un rayonnement électromagnétique situé hors du spectre lumineux visible, se démarquent clairement des fils de chaîne de base (11) et des fils de trame de base (12), rendant ainsi visible le motif du code (30) qu'ils génèrent, tissé dans le textile de base (30),
**en ce que** le fil de trame du code (32) a été doté d'une teinte fluorescente invisible dans la partie visible du spectre et que le motif codé (30) devient visible dans le ruban sous l'effet de la lumière ultraviolette (35).

2. Ruban selon la revendication 1, **caractérisé en ce que** plusieurs fils de trame du code (32) ont été prévus, composés d'un fil à l'autre de matériaux filaires appartenant à des variétés différentes,
et **en ce que** ces variétés de fils se distinguent les unes des autres lorsque observées dans une ou plusieurs bandes fréquentielles du rayonnement électromagnétique situé hors de la plage visible, mais qu'elles sont visuellement identiques lorsque observées dans le spectre de la lumière visible.

3. Ruban selon la revendication 2, **caractérisé en ce que** chaque variété de fil composant les fils de code (32) est agencée selon un schéma codé spécifique (30) dans le textile de base (10).

4. Ruban selon les revendications 1 à 3, **caractérisé en ce que** le schéma codé (30) généré par les fils de code (35) est lisible à la machine.

5. Procédé de confection d'un ruban tissé selon l'une ou plusieurs des revendications 1 à 4, sachant que le textile de base (10) est fabriqué à partir d'une nappe de fils de chaîne de base (11) et d'au moins un fil de trame de base (12) servant à l'insertion de la trame (45),
et au minimum d'un autre fil de trame de code (32) générant dans le ruban un schéma de code en forme de code barres,
**caractérisé en ce que**
lors de l'insertion de la trame (45, 46) pendant le tissage du textile de base (10), on se sert aussi, outre le fil de trame de base (12), des fils de trame de code (32),
le choix de ces fils de trame de code (32) pour les insérer (46) à la place du fil de trame de base (12) n'a lieu
que lorsqu'on veut qu'à l'endroit concerné la barre (31) d'un code barres apparaisse dans le ruban (31) en conformité avec le schéma du code (30),
tandis que sur les espaces intercalaires (34) situés entre les barres (31) du code barres mais aussi sur les segments du ruban situés hors du schéma du code (30), on ne se sert que du fil de trame de base (12) pour former la trame (45).

6. Procédé servant à utiliser les différents segments, servant d'étiquettes (51, 52, 53), du ruban tissé selon l'une ou plusieurs des revendications 1 à 5,
sachant que les étiquettes (51, 52, 53) comportent un schéma de code (32) sous forme de code barres et que ce schéma de code (32) est lu par un appareil à cet effet,
**caractérisé en ce que**
le schéma de code (32) de chaque étiquette (51) ou d'un groupe d'étiquettes reçoit une indexation spécifique (J) à laquelle sont attribués des emplacements mémoire à part dans une mémoire centrale de données (49),
**en ce qu'**un ensemble de lecteurs (47 à 47"') et le cas échéant un ensemble d'équipements de saisie (55 à 55") ont été prévus pour des données supplémentaires (X, Y, Z) spécifiques aux utilisateurs dans une ou plusieurs stations I à IV, ceci tout le long de la chaîne des utilisateurs de ces étiquettes (51), entre la fabrication des étiquettes (I) à une extrémité, et l'utilisation finale des étiquettes (IV) à l'autre extrémité,
sachant que les données spécifiques aux utilisateurs (X, Y, Z) contiennent des indications avancées sur l'étiquette (51), sur le traitement de l'étiquette et/ou sur le produit (57) qu'il est prévu de revêtir de l'étiquette, indications que saisissent le fabricant (I), le transformateur (II), le commerçant (III) et/ou le vendeur (IV),
**en ce que** ces appareils de lecture (47 à 47"') et les équipements de saisie (55 à 55") sont reliés à la mémoire centrale de données (49), sachant que dans cette mémoire de données (49), les données (X, Y, Z) spécifiques aux utilisateurs et saisies aux différentes stations I à III, sont attribuées sous forme de paquets de données aux indexations (J) lues et afférentes à chaque combinaison individuelle (60, 60') d'étiquette (51) et de produit (57),
**en ce qu'**à la station finale IV de la chaîne d'utilisateurs se trouve positionné en plus, hormis un lecteur (47"') de l'étiquette (51) fixée sur le produit concerné (57), un appareil de contrôle (62) raccordé à la mémoire de données (49), tel un écran (63), une imprimante (64) et/ou un transmetteur de signaux, et **en ce que** l'appareil de contrôle (62) puise, dans la mémoire de données (49), le jeu de données spécifiques (X, Y, Z) afférent à l'indexation (J) lue, l'affiche et/ou l'analyse.
et **en ce qu'**une personne chargée du contrôle ou l'appareil de contrôle (62) lui-même vérifie la concordance (66) de ce jeu de données (X, Y, Z) avec la physionomie concrète de la combinaison (60, 60') de l'étiquette (51) avec le produit (57).
